# EUROPÄISCHE PATENTSCHRIFT

(11) **EP 3 441 118 B1**
(45) Veröffentlichungstag und Bekanntmachung des Hinweises auf die Patenterteilung: **13.01.2021**
(21) Anmeldenummer: 18177166.8
(22) Anmeldetag: 12.06.2018
(51) Int. Cl.: A62C 35/58, A62C 37/36, B61D 17/18, E04F 13/08, E04F 13/074, B32B 3/12, B32B 3/26, B32B 5/26, B32B 5/18, B32B 15/14, B32B 15/18, B32B 15/20, B32B 19/02, B32B 27/08, B32B 27/12, E04C 2/34, A62C 37/44

(54) **ZUR BRANDBEKÄMPFUNG GEEIGNETES VERSCHALUNGSELEMENT**
FORMWORK ELEMENT SUITABLE FOR FIRE FIGHTING
ÉLÉMENT DE COFFRAGE APPROPRIÉ À LA LUTTE CONTRE LES INCENDIES

(30) Priorität: 04.08.2017 DE 102017117774
(43) Veröffentlichungstag der Anmeldung: 13.02.2019
(73) Patentinhaber: GETA Gesellschaft für Entwicklung, Technik - Anwendung für Holz- und Kunststofferzeugnisse mbH, 88239 Wangen (DE)
(72) Erfinder: Wieschermann, Jochen, 88682 Salem (DE)
(74) Vertreter: Kiessling, Christian

(56) Entgegenhaltungen:
- WO-A1-2008/128488
- DE-A1- 3 830 021
- GB-A- 2 520 510
- KR-B1- 101 528 339
- US-A1- 2004 250 487

## Beschreibung

Die Erfindung betrifft ein sandwichartig geschichtetes Verschalungselement mit einer Frontfläche und einer Rückfläche sowie mit einer in dem Zwischenraum zwischen zwei zueinander parallel angeordneten Schichtelementen vorgesehenen, mindestens eine Fluidleitung enthaltenden Kernschicht.

Verschalungselemente der eingangs genannten Art werden im Stand der Technik verwendet, um Innenwandungen von Bussen, Zügen oder Flugzeugen aber auch von Gebäuden zu verschalen. Generell dürfen Verschalungselemente nur schwer brennbar sein, um zumindest einen passiven Brandschutz zu gewährleisten. Verschalungselemente dieser Art sind z.B. aus DE 3830021 A1 und GB 2520510 A bekannt. Ein aktiver Brandschutz im Sinne einer Brandbekämpfung ist bei bekannten Verschalungselementen bis dato nicht vorgesehen.

Aufgabe der Erfindung ist es deshalb, ein Verschalungselement zu schaffen, mit dessen Hilfe eine aktive Brandbekämpfung ermöglicht ist.

Für ein Verschalungselement der eingangs genannten Art wird diese Aufgabe erfindungsgemäß dadurch gelöst, dass in der Frontfläche mindestens zwei Sensoren integriert sind, die eine Ortung eines Brandherdes in einem vorgegebenen Raumbereicht vor der Frontfläche des Verschalungselementes vornehmen, wobei mit der Fluidleitung verbundene schwenkbar gelagerte Mittel zur Brandbekämpfung vorgesehen sind, die mittels einer Ortungssignale der Sensoren verarbeitenden Steuereinrichtung ausrichtbar sind, um eine Löschsubstanz auf den Brandherd auszurichten.

Bevorzugte Ausführungsformen der Erfindung sind Gegenstand der Unteransprüche, deren Elemente im Sinne einer weiteren Verbesserung des Lösungsansatzes der der Erfindung zugrunde gelegten Aufgabe wirken.

Bei der erfindungsgemäßen Vorrichtung wird mit Hilfe der Merkmalskombination, dass in der Frontfläche mindestens zwei Sensoren integriert sind, die eine Ortung eines Brandherdes in einem vorgegebenen Raumbereicht vor der Frontfläche des Verschalungselementes vornehmen, wobei mit der Fluidleitung verbundene schwenkbar gelagerte Mittel zur Brandbekämpfung vorgesehen sind, die mittels einer Ortungssignale der Sensoren verarbeitenden Steuereinrichtung ausrichtbar sind, um eine Löschsubstanz auf den Brandherd auszurichten, erstmalig eine aktive Brandbekämpfung ermöglicht, indem ein automatisiertes Einbringen von Löschsubstanzen auf einen Brandherd in einem überwachten Raumbereich vor der Frontfläche des Verschalungselementes noch im Entstehen bzw. unmittelbar nach Entstehen des Brandherdes ermöglicht ist.

Gemäß einer ersten bevorzugten Ausführungsform der erfindungsgemäßen Vorrichtung ist vorgesehen, dass die Sensoren als Infrarotsensoren ausgeführt sind. Alternativ oder zusätzlich können die Sensoren auch als Lichtsensoren ausgeführt sein.

Gemäß einer weiteren bevorzugten Ausführungsform der erfindungsgemäßen Vorrichtung ist als Mittel zur Brandbekämpfung mindestens eine in die Frontfläche integrierte verschenkbar gelagerte Düse vorgesehen, die ausgelegt ist, um im Brandfall einen Strahl Löschsubstanz gezielt in einen den Brandherd umgebenden Raumbereich abzugeben.

Vorzugsweise ist in die Fluidleitung ein mittels einer Steuerschaltung ansteuerbares Steuerventil integriert, um einen Durchsatz an Löschsubstanz durch die Fluidleitung zu steuern, wobei ein Ende der Fluidleitung in mindestens eine im Bereich der Frontfläche angebrachte schwenkbar gelagerte Düse mündet.

Gemäß einer einfachen bevorzugten Ausführungsform der erfindungsgemäßen Vorrichtung sind zwei voneinander in definiertem Abstand angeordnete Sensoren vorgesehen, die jeweils mit einem optischen System gekoppelt sind, das ausgelegt ist, um Infrarotsignale aus dem insgesamten Raumbereich vor der Frontfläche des Verschalungselementes zu empfangen.

Gemäß einer besonders effizienten bevorzugten Ausführungsform der erfindungsgemäßen Vorrichtung sind drei voneinander in definiertem Abstand angeordnete Sensoren vorgesehen, die jeweils mit einem optischen System gekoppelt sind, das ausgelegt ist, um Infrarotsignale aus dem insgesamten Raumbereich vor der Frontfläche des Verschalungselementes zu empfangen.

Je nach obiger Ausführungsform ist eine Ortungseinrichtung vorgesehen, die aufgrund der unterschiedlichen Position eines Brandherdes in den von den zwei bzw. drei Sensoren gelieferten Bildern eine zweidimensionale bzw. dreidimensionale Ortung des Brandherdes vornimmt.

Gemäß einer weiteren bevorzugten Ausführungsform des erfindungsgemäßen Verschalungselementes enthält mindestens eines der Schichtelemente eine thermisch isolierende Faser, die zusammen mit einer aushärtbaren flüssigen Substanz in eine planparallele Flächen aufweisende feste Form gebracht ist. Die thermisch isolierende Faser ist dabei vorzugsweise aus faserverstärktem Kunststoff hergestellt.

Alternativ kann mindestens eines der Schichtelemente aus einem Metall hergestellt sein, wobei hier insbesondere Stahl und Aluminium in Frage kommen.

Des Weiteren kann auch die mindestens eine Fluidleitung enthaltende Kernschicht aus thermisch isolierender Faser hergestellt sein, die zusammen mit einer aushärtbaren flüssigen Substanz in eine zwischen den Schichtelementen platzierbare, planparallele Flächen aufweisende feste Form gebracht ist. Auch hierbei ist die thermisch isolierende Faser vorzugsweise aus Basalt erstellt.

Alternativ kann die mindestens eine Fluidleitung enthaltende Kernschicht eine poröse Struktur aufweisen, wobei die Kernschicht vorzugsweise auch in eine zwischen den Schichtelementen platzierbare, planparallele Flächen aufweisende feste Form gebracht ist.

Weiter alternativ kann die Kernschicht aus einem auf Basis eines Kunststoffmaterials erstellten Schaumstoff hergestellt sein oder eine metallische Wabenstruktur aufweisen.

Das erfindungsgemäße Verschalungselement wird im Folgenden anhand einer bevorzugten Ausführungsform erläutert, die in den Figuren der Zeichnungen dargestellt sind. Darin zeigen:

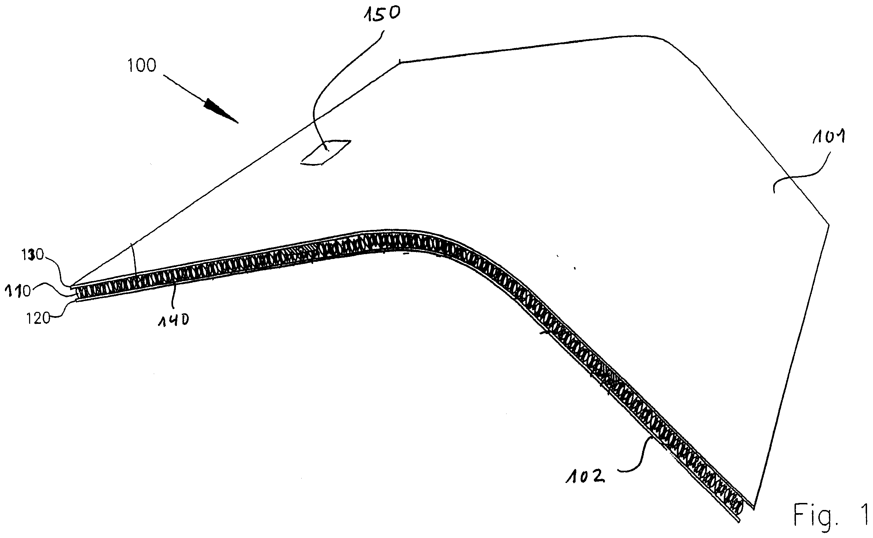

- Fig.1: eine bevorzugte Ausführungsform des erfindungsgemäßen Verschalungselementes in einer Seitenansicht.

Das in Figur 1 dargestellte erfindungsgemäße sandwichartig geschichtete Verschalungselement 100 enthält eine Frontfläche 101 und eine Rückfläche 102 sowie eine in dem Zwischenraum zwischen zwei zueinander parallel angeordneten Schichtelementen 120, 130 vorgesehene Kernschicht 110, in die eine Fluidleitung 140 integriert ist.

In die Frontfläche 101 sind drei Sensoren 150 integriert, die eine Ortung eines Brandherdes in einem vorgegebenen Raumbereicht vor der Frontfläche 101 des Verschalungselementes vornehmen, wobei mit einer Fluidleitung 140 verbundene schwenkbar gelagerte Mittel zur Brandbekämpfung vorgesehen sind, die mittels einer Ortungssignale der Sensoren 150 verarbeitenden Steuereinrichtung ausrichtbar sind, um eine Löschsubstanz auf den Brandherd auszurichten.

Die Sensoren 150 sind als Infrarotsensoren ausgeführt.

Als Mittel zur Brandbekämpfung sind zwei in die Frontfläche 101 integrierte verschwenkbar gelagerte Düsen vorgesehen, die ausgelegt sind, um im Brandfall einen Strahl Löschsubstanz gezielt in einen den Brandherd umgebenden Raumbereich abzugeben.

In die Fluidleitung 140 ist ein mittels einer Steuerschaltung ansteuerbares Steuerventil integriert, um einen Durchsatz an Löschsubstanz durch die Fluidleitung zu steuern, wobei ein Ende der Fluidleitung in mindestens eine im Bereich der Frontfläche angebrachte schwenkbar gelagerte Düse mündet.

Drei voneinander in definiertem Abstand angeordnete Sensoren 150 sind vorgesehen, die jeweils mit einem optischen System gekoppelt sind, das ausgelegt ist, um Infrarotsignale aus dem insgesamten Raumbereich vor der Frontfläche des Verschalungselementes zu empfangen.

Eine Ortungseinrichtung ist vorgesehen, die aufgrund der unterschiedlichen Position eines Brandherdes in den von den zwei bzw. drei Sensoren gelieferten Bildern eine dreidimensionale Ortung des Brandherdes vornimmt.

Die Schichtelemente 120, 130 enthalten eine Mineralfaser, die zusammen mit einer aushärtbaren flüssigen Substanz in eine planparallele Flächen aufweisende feste Form gebracht ist.

Auch die die Fluidleitung 140 enthaltende Kernschicht ist aus Mineralfaser hergestellt, die zusammen mit einer aushärtbaren flüssigen Substanz in eine zwischen den Schichtelementen 120, 130 platzierbare, planparallele Flächen aufweisende feste Form gebracht ist.

Die Mineralfaser sowohl der Schichtelemente 120, 130 als auch der Kernschicht ist aus Basalt hergestellt.

Das oben erläuterte Ausführungsbeispiel der Erfindung dient lediglich dem Zweck eines besseren Verständnisses der durch die Ansprüche vorgegebenen erfindungsgemäßen Lehre, die als solche durch das Ausführungsbeispiel nicht eingeschränkt ist.

### Bezugszeichenliste

- 100: Verschalungselement
- 101: Frontfläche
- 102: Rückfläche
- 110: Kernschicht
- 120: Schichtelement
- 130: Schichtelement
- 140: Fluidleitung
- 150: Sensor

## Patentansprüche

1. Sandwichartig geschichtetes Verschalungselement (100) mit einer Frontfläche (101) und einer Rückfläche (102) sowie mit einer in dem Zwischenraum zwischen zwei zueinander parallel angeordneten Schichtelementen (120, 130) vorgesehenen, mindestens eine Fluidleitung (140) enthaltenden Kernschicht (110), **dadurch gekennzeichnet, dass** in der Frontfläche (101) mindestens zwei Sensoren (150) integriert sind, die eine Ortung eines Brandherdes in einem vorgegebenen Raumbereich vor der Frontfläche des Verschalungselementes vornehmen, wobei mit der Fluidleitung (140) verbundene schwenkbar gelagerte Mittel zur Brandbekämpfung vorgesehen sind, die mittels einer Ortungssignale der Sensoren verarbeitenden Steuereinrichtung ausrichtbar sind, um eine Löschsubstanz auf den Brandherd auszurichten.

2. Verschalungselement nach Anspruch 1, **dadurch gekennzeichnet, dass** die Sensoren als Infrarotsensoren ausgeführt sind.

3. Verschalungselement nach Anspruch 1, **dadurch gekennzeichnet, dass** die Sensoren (150) als Lichtsensoren ausgeführt sind.

4. Verschalungselement nach einem der vorhergehenden Ansprüche, **dadurch gekennzeichnet, dass** als Mittel zur Brandbekämpfung mindestens eine in die Frontfläche (101) integrierte verschwenkbar gelagerte Düse vorgesehen ist, die ausgelegt ist, um im Brandfall einen Strahl Löschsubstanz gezielt in einen den Brandherd umgebenden Raumbereich abzugeben.

5. Verschalungselement nach einem der vorhergehenden Ansprüche, **dadurch gekennzeichnet, dass** in die Fluidleitung (140) ein mittels einer Steuerschaltung ansteuerbares Steuerventil integriert ist, um einen Durchsatz an Löschsubstanz durch die Fluidleitung (140) zu steuern, wobei ein Ende der Fluidleitung (140) in mindestens eine im Bereich der Frontfläche angebrachte schwenkbar gelagerte Düse mündet.

6. Verschalungselement nach einem der Ansprüche 1 bis 5, **dadurch gekennzeichnet, dass** zwei voneinander in definiertem Abstand angeordnete Sensoren (150) vorgesehen sind, die jeweils mit einem optischen System gekoppelt sind, das ausgelegt ist, um Infrarotsignale aus dem insgesamten Raumbereich vor der Frontfläche des Verschalungselementes (100) zu empfangen.

7. Verschalungselement nach einem der Ansprüche 1 bis 5, **dadurch gekennzeichnet, dass** drei voneinander in definiertem Abstand angeordnete Sensoren (150) vorgesehen sind, die jeweils mit einem optischen System gekoppelt sind, das ausgelegt ist, um Infrarotsignale aus dem insgesamten Raumbereich vor der Frontfläche (101) des Verschalungselementes zu empfangen.

8. Verschalungselement nach einem der Ansprüche 6 oder 7, **dadurch gekennzeichnet, dass** eine Ortungseinrichtung vorgesehen ist, die aufgrund der unterschiedlichen Position eines Brandherdes in den von den zwei bzw. drei Sensoren (150) gelieferten Bildern eine zweidimensionale bzw. dreidimensionale Ortung des Brandherdes vornimmt.

9. Verschalungselement nach einem der Ansprüche 1 bis 8, **dadurch gekennzeichnet, dass** mindestens eines der Schichtelemente (120, 130) eine thermisch isolierende Faser enthält, die zusammen mit einer aushärtbaren flüssigen Substanz in eine planparallele Flächen aufweisende feste Form gebracht ist.

10. Verschalungselement nach Anspruch 9, **dadurch gekennzeichnet, dass** die thermisch isolierende Faser des mindestens einen Schichtelementes (120, 130) aus faserverstärktem Kunststoff hergestellt ist.

## Claims

1. Formwork element (100) which is layered in a sandwich like fashion and has a front face (101) and a rear face (102) as well as having a core layer (110) which is provided in the intermediate space between two layer elements (120, 130) arranged parallel to one another, and contains at least one fluid line (140), **characterized in that** at least two sensors (150)) which determine a location of the source of a fire in a predefined spatial area in front of the front face (101) of the formwork element are integrated in the front face, wherein pivotably mounted means for firefighting, which are connected to the fluid line (140), are provided, which means can be oriented by means of a control device which processes locating signals of the sensors, in order to orient an extinguishing substance onto the source of the fire.

2. Formwork element according to Claim 1, **characterized in that** the sensors are embodied as infrared sensors.

3. Formwork element according to Claim 1, **characterized in that** the sensors (150) are embodied as light sensors.

4. Formwork element according to one of the preceding claims, **characterized in that** at least one pivotably mounted nozzle which is integrated in the front face (101) is provided as a firefighting means, said nozzle being configured to output, in the case of a fire, a jet of extinguishing substance in a targeted fashion into a spatial area surrounding the source of the fire.

5. Formwork element according to one of the preceding claims, **characterized in that** integrated into the fluid line (140) is a control valve which can be actuated by means of a control circuit, in order to control a throughput rate of extinguishing substance through the fluid line (140), wherein one end of the fluid line (140) opens into at least one pivotably mounted nozzle which is attached in the region of the front face.

6. Formwork element according to one of Claims 1 to 5, **characterized in that** two sensors (150) which are arranged at a defined distance from one another are provided, which sensors (150) are each coupled to an optical system which is configured to receive infrared signals from the entire spatial area in front of the front face of the formwork element (100).

7. Formwork element according to one of Claims 1 to 5, **characterized in that** three sensors (150) which are arranged at a defined distance from one another are provided, which sensors (150) are each coupled to an optical system which is configured to receive infrared signals from the entire spatial area in front of the front face (101) of the formwork element.

8. Formwork element according to one of Claims 6 and 7, **characterized in that** a locating device is provided which carries out a two-dimensional or three-dimensional locating process of the source of the fire on the basis of the different position of the source of the fire in the images supplied by the two or three sensors (150).

9. Formwork element according to one of Claims 1 to 8, **characterized in that** at least one of the layer elements (120, 130) contains a thermally insulating fibre which is converted, together with a curable liquid substance, into a solid form having plane-parallel faces.

10. Formwork element according to Claim 9, **characterized in that** the thermally insulating fibre of the at least one-layer element (120, 130) is manufactured from fibre-reinforced plastic.

## Revendications

1. Élément de coffrage (100) en couches de type sandwich comprenant une surface avant (101) et une surface arrière (102) ainsi qu'une couche centrale (110) qui se trouve dans l'espace intermédiaire entre les deux éléments de couche (120, 130) disposés parallèlement l'un à l'autre et qui contient au moins une conduite de fluide (140), **caractérisé en ce qu'**au moins deux capteurs (150) sont intégrés dans la surface avant (101), lesquels effectuent une localisation d'un foyer d'incendie dans une zone d'espace prédéterminée devant la surface avant de l'élément de coffrage, des moyens de lutte contre l'incendie montés pivotant et reliés à la conduite de fluide (140) étant présents, lesquels peuvent être orientés au moyen d'un dispositif de commande qui traite les signaux de localisation des capteurs afin de diriger une substance d'extinction sur le foyer d'incendie.

2. Élément de coffrage selon la revendication 1, **caractérisé en ce que** les capteurs sont réalisés sous la forme de capteurs d'infrarouges.

3. Élément de coffrage selon la revendication 1, **caractérisé en ce que** les capteurs (150) sont réalisés sous la forme de capteurs de lumière.

4. Élément de coffrage selon l'une des revendications précédentes, **caractérisé en ce que** les moyens de lutte contre l'incendie présents sont au moins une buse montée pivotante et intégrée dans la surface avant (101), laquelle est conçue pour, en cas d'incendie, délivrer un jet de substance d'extinction de manière ciblée dans une zone de l'espace qui entoure le foyer d'incendie.

5. Élément de coffrage selon l'une des revendications précédentes, **caractérisé en ce que** dans la conduite de fluide (140) est intégrée une vanne de commande qui peut être commandée au moyen d'un circuit de commande en vue de commander un débit de la substance d'extinction à travers la conduite de fluide (140), une extrémité de la conduite de fluide (140) débouchant dans au moins une buse montée pivotante installée dans la zone de la surface avant.

6. Élément de coffrage selon l'une des revendications 1 à 5, **caractérisé en ce que** deux capteurs (150) disposés à un écartement défini l'un de l'autre sont présents, lesquels sont respectivement couplés à un système optique qui est conçu pour recevoir des signaux infrarouges en provenance de l'ensemble de la zone d'espace devant la surface avant de l'élément de coffrage (100).

7. Élément de coffrage selon l'une des revendications 1 à 5, **caractérisé en ce que** trois capteurs (150) disposés à un écartement défini l'un de l'autre sont présents, lesquels sont respectivement couplés à un système optique qui est conçu pour recevoir des signaux infrarouges en provenance de l'ensemble de la zone d'espace devant la surface avant (101) de l'élément de coffrage.

8. Élément de coffrage selon l'une des revendications 6 ou 7, **caractérisé en ce qu'**un dispositif de localisation est présent, lequel effectue une localisation bidimensionnelle ou tridimensionnelle du foyer d'incendie en s'appuyant sur la position différente d'un foyer d'incendie dans les images délivrées par les deux ou les trois capteurs (150).

9. Élément de coffrage selon l'une des revendications 1 à 8, **caractérisé en ce qu'**au moins l'un des éléments de couche (120, 130) contient une fibre d'isolation thermique qui, conjointement avec une substance liquide durcissable, est amenée dans un moule fixe possédant des surfaces planes et parallèles.

10. Élément de coffrage selon la revendication 9, **caractérisé en ce que** la fibre d'isolation thermique de l'au moins un élément de couche (120, 130) est fabriquée à partir de matière plastique renforcée par des fibres.
